# EUROPEAN PATENT SPECIFICATION

(11) **EP 0 923 691 B1**
(45) Date of publication and mention of the grant of the patent: **19.02.2003**
(21) Application number: 97939033.3
(22) Date of filing: 04.09.1997
(51) Int. Cl.: F16K 31/40, F16K 31/34, E03D 5/02

(54) **FLOAT VALVE**
SCHWIMMERVENTIL
SOUPAPE A FLOTTEUR

(30) Priority: 04.09.1996 GB 9618417; 29.04.1997 GB 9708753
(43) Date of publication of application: 23.06.1999
(73) Proprietor: Cistermiser Limited, Woodley, Reading RG5 3AN (GB)
(72) Inventor: NORTH, Alan, David, Reading RG10 8QS (GB)
(74) Representative: Pendered, Timothy George
(86) International application number: GB9702379
(87) International publication number: WO98010209

(56) References cited:
- FR-A- 2 681 891
- US-A- 2 760 204
- US-A- 4 230 145

## Description

The invention relates to valve apparatus for use in controlling the filling and the release of fluids from fluids storage vessels and particularly, but not exclusively, to such valve apparatus for use in water closet cisterns instead of the syphon-type flushing systems with separate ballcock arrangements conventionally used in the United Kingdom.

WO-A-9402691 discloses a submersed solenoid valve in a water closet cistern. The valve comprises a valve member and a body defining an outlet which is secured in an opening in the bottom of the cistern. The valve member is held in a position in which flow from the cistern via the outlet is prevented by virtue of the weight of the valve member and the head of water in the cistern; optionally a spring may also be used to assist closure. The valve member is moved from its flow-preventing position to a flow-permitting position by energising the solenoid which lifts the valve member away from the outlet and holds it in the flow-permitting position for as long as the solenoid remains energised. When the solenoid is de-energised, the valve member falls back to the flow preventing position assisted by the closure spring if such is provided.

A problem with this known valve is that the solenoid must be supplied with electrical energy throughout the flushing operation in order to hold the valve member in the flow permitting position. Furthermore, in order to raise the valve member a relatively high current is required in order to overcome the opposing force exerted on the valve member by the head of water in the cistern. These characteristics represent a particular problem if the valve is to be battery rather than mains powered since the energy required to lift the valve member away from the outlet and maintain it in the flow-permitting position can prove a significant drain on the battery which would therefore require frequent replacement.

Furthermore, the valve disclosed in WO-A-9402691 requires the installation of a separate valving arrangement for controlling filling of the cistern.

Other valve arrangements are known, for example from US-A-4 230 145.

The present invention provides a valve apparatus as defined in claim 1. Preferred embodiments of the invention are defined in the dependent claims.

In order that the invention may be well understood some embodiments thereof, which are given by way of example only, will now be described with reference to the drawings, in which:
Figure 1 is a sectioned front elevation of a water closet cistern provided with a first embodiment of a unitary valve apparatus for use in controlling the filling and release of fluids from a fluids storage vessel;
Figure 2 is a view from above the water closet cistern with the lid removed;
Figure 3 is a sectioned side elevation of the valve apparatus of Figure 1;
Figure 4 shows a modified version of the valve apparatus of Figure 3;
Figure 5 is a side elevation partially cutaway and in section of a second embodiment of unitary valve apparatus for use in controlling the filling and release of fluids from a fluids storage vessel showing outlet valve means thereof in a flow permitting position;
Figure 6 is a view corresponding to Figure 5 showing the outlet valve means in a flow preventing position;
Figure 7 is a schematic illustration of the apparatus of Figure 5 with the outlet valve means in a flow preventing condition;
Figure 8 is a schematic illustration of the apparatus of Figure 5 in the operating condition shown in Figure 5;
Figure 9 is a schematic illustration of the apparatus of Figure 5 in the operating condition shown in Figure 6.

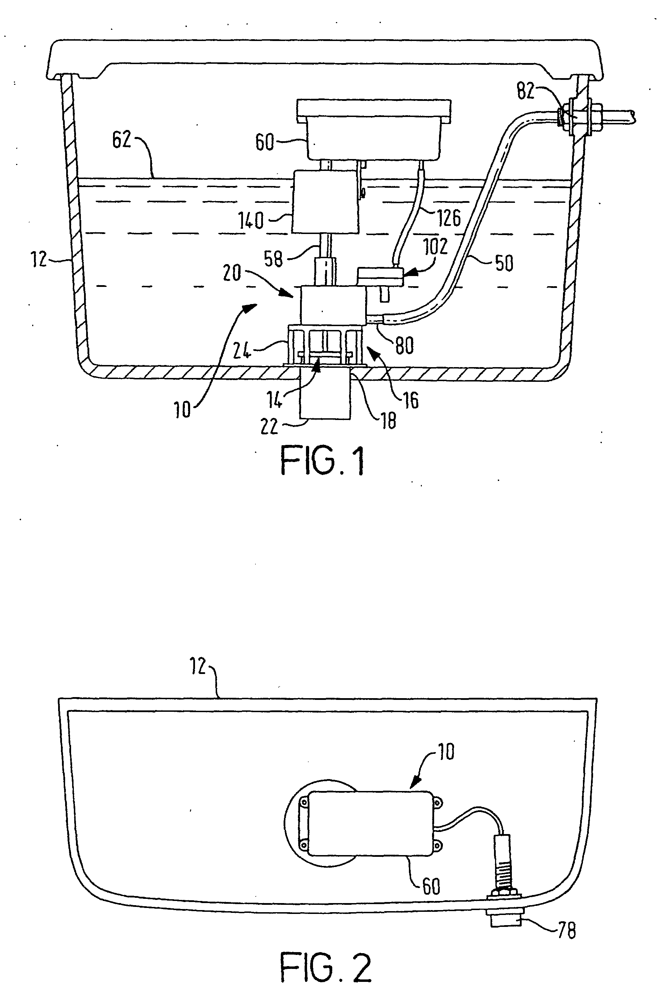

Referring to Figures 1 to 3, a unitary valve apparatus 10 for use in controlling the filling and release of fluids from a fluid storage vessel is shown mounted for use in a water closet cistern 12.

Referring to Figure 1, the valve apparatus 10 comprises outlet valve means 14, means 16 for locating the valve means 14 relative to an opening 18 of the cistern 12 and actuating means 20 for the valve means.

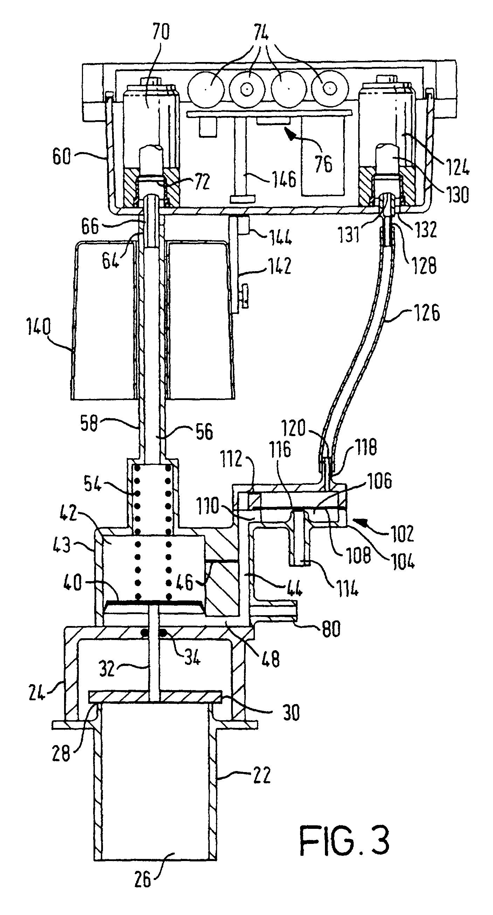

In more detail and referring to Figures 1 and 3, the locating means 16 comprises an outlet spigot 22 and a fenestrated cup-like body 24 disposed on the outlet spigot. The outlet spigot 22 has an axially extending through-bore 26 through which water may be released from the cistern 12 and defines a valve seat 28 for the outlet valve means 14.

The valve means 14 comprises a plunger head 30 which is sealingly engageable with the valve seat 28 and a valve stem 32 on which the plunger head 30 is mounted. The valve stem 32 extends through an aperture therefor provided in the cup-like body 24. An O-ring 34 is provided in the aperture for sealingly engaging the valve stem 32. The arrangement is such that the valve stem 32 is slideable through the O-ring 34.

The actuating means 20 comprises a cup seal 40 disposed in a chamber 42. The cup seal 40 sealingly engages the walls of the chamber 42 defined by a housing 43 and the cup-like body 24. The cup seal is connected to the valve stem 32 so as to be moveable therewith.

The actuating means 20 further comprises a passage 44 extending along one side of the housing 43 and communicating with a first inlet 46 and a second inlet 48 each of which leads into the chamber 42. The first inlet 46 is arranged to allow fluid in the passage 44 to enter the chamber 42 to act on a first side (the upper side as viewed in Figure 3) of the cup seal 40 and the second inlet 48 is arranged to allow fluid in the passage 44 to enter the chamber to act on a second side (the lower side as viewed in Figure 3) of the cup seal.

A compression spring 54 is disposed in the chamber 42 and acts against the upper side of the cup seal 40 to bias the plunger head 30 against the valve seat 28 and thereby assist in maintaining the valve means 14 in a closed condition.

An exhaust passage 56 defined by a wall 58 integral with the housing 43 extends from the chamber to a control box 60 which (as shown in Figure 1) is disposed above the water level 62 in the cistern 12. An exhaust aperture 64 is provided in the wall 58 adjacent the location at which it enters the control box 60. An insert 66 is fitted in the passage 56 so as to prevent water passing directly from the passage to the exhaust aperture 64.

A magnetically latching solenoid valve 70 is mounted inside the control box 60 such that a valve member 72 thereof can seat against an end of the insert 66 for preventing fluid flow from the passage 56 to the exhaust aperture 64.

The first inlet 46 is very small and is sized such that the flow of pressurised fluid therethrough will be considerably slower than the flow of the fluid through the exhaust pathway defined by the exhaust passage 56, exhaust aperture 64, insert 66 and solenoid valve 70.

The control box 60 also contains batteries 74 for energising the solenoid valve 70 and control circuitry 76 for controlling the operation of the solenoid valve in response to signals provided by an infrared sensor 78 mounted in a front face of the cistern 12 in a position in which a flush handle would conventionally be fitted.

As shown in Figure 1, a flexible tube 50 extends between an inlet 80 to the passage 44 and a water inlet fitting 82 mounted in a side wall of the cistern. Externally of the cistern, the water inlet fitting 82 is connected to a pressurised water source which may be either the mains water supply or a header tank. Water is supplied to the apparatus 10 via the inlet fitting 82 and flexible tube 50 for actuating the valve means 14 and refilling the cistern 12 as described in more detail hereinbelow.

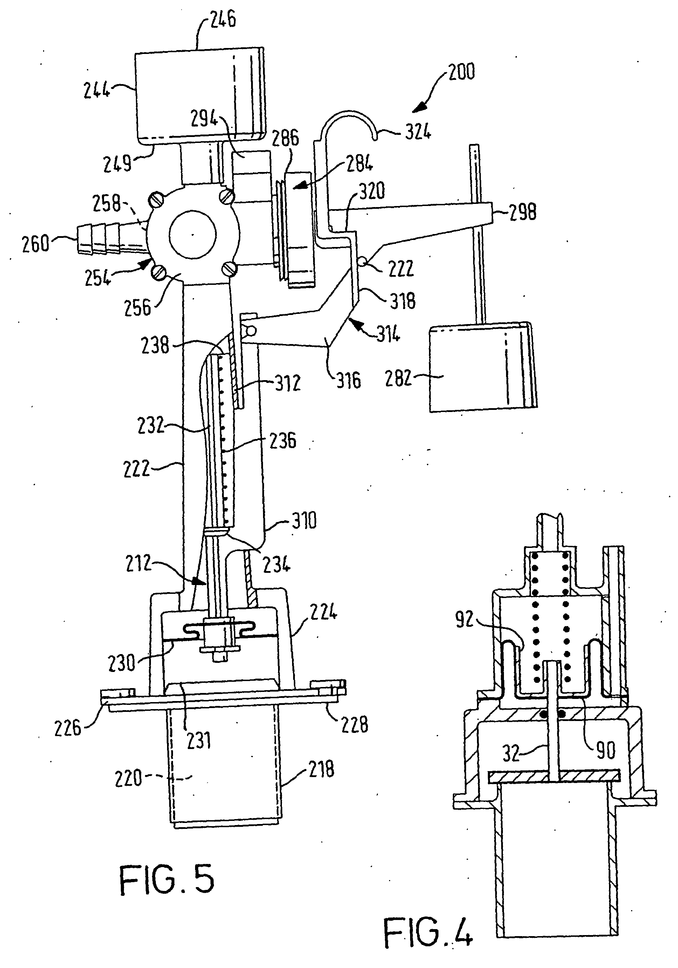

The modified version of the valve apparatus 10 shown in Figure 4 differs from the version shown in Figure 3 in that a rolling diaphragm 90 is provided instead of the cup seal 40. A backing member 92 is disposed against the upper side (as viewed in the drawing) of the rolling diaphragm 90 and is fixed to the valve stem 32.

In the closed, equilibrium, position of the valve apparatus 10 shown in Figures 1 and 3, the plunger is held in sealing engagement with the valve seat 28 preventing the release of water from the cistern 12. As long as a fluid pressure balance is maintained on the cup seal 40 the plunger head will be held against the valve seat by the force exerted by the compression spring 54 assisted by the force exerted on the plunger head 30 by the pressure of the water in the cistern 12.

The fluid pressure balance acting on the cup seal 40 exists because each side of the cup seal is exposed to water from a common source, ie the pressurised water supply to the cistern. The pressurised water is conducted to the underside of the cup seal via the flexible tube 50, passage 44 and second inlet 48 and from the passage 44 to the upper side of the cup seal via the first inlet 46. The cross-section area of the two sides of the cup seal is substantially the same so that forces generated by fluid pressure acting on the cup seal are substantially equal.

In order to operate the valve apparatus 10 so that the contents of the cistern 12 can be used to flush a lavatory, the user passes his hand in front of the infra red sensor 78. This generates a signal which is amplified by the control circuitry 76. The amplified control signal briefly energises the coil of the solenoid valve 70 causing the valve member 72 to lift. The valve magnetically latches in the lifted position. Once the valve member 72 has lifted, pressurised water in the chamber 42 acting on the upper-side of cup seal 40 is exhausted into the cistern at a location which is at atmospheric pressure via the exhaust passage 56, the insert 66, the solenoid valve 70 and the exhaust aperture 64. The first inlet 46 through which pressurised water is supplied for acting on the upper side of the cup seal is so narrow that water cannot be supplied at a rate sufficient to replace the water which is exhausted from the chamber. This sets up a pressure imbalance on the cup seal 40 and the force generated by the pressurised water acting on the underside of the cup seal is sufficient to overcome the force of the spring 54 and the tank pressure water acting on the plunger head 30. Accordingly, the cup seal is pushed upwards in the chamber 42 by the water pressure acting on the underside thereof. The upward movement of the cup seal 40 causes the plunger head 30 to be lifted away from the valve seat 28. This allows water in the cistern to pass into the outlet passage 26 via the fenestrated cup-like body 24.

After a predetermined period sufficient to discharge the contents of the cistern the control circuitry 76 provides a reverse polarity signal to the latching solenoid valve 70 so that the valve member 72 is released and returns to its closed position seated against the insert 66. With the exhaust pathway thus blocked the chamber 42 above the cup seal gradually fills with pressurised water conducted from the water inlet fitting 82 via the flexible tube 50, passage 44 and first inlet 46. Eventually the water pressure acting on the upper side of the cup seal 40 and the force applied by the spring 50 is sufficient to overcome the force generated by the water pressure acting on the underside of the cup seal which is therefore driven downwardly in the chamber 42. The downward movement of the cup seal 40 returns the plunger head 30 to a position in which it seals against the valve seat 28. The cistern is then refilled to the desired water level 62 under the control of a float valve 140 as described in more detail hereinbelow.

The unitary valve apparatus 10 is provided with an integral control valve arrangement for controlling filling of the cistern. This has the advantages that installation is simplified and the introduction of interlocks which prevent the control valve opening whilst the cistern is discharging is made possible. This is desirable since the pressure drop at the water inlet 82 generated when the control valve opens reduces the water pressure acting on the underside of the cup seal 40 to hold the valve apparatus open.

The control valve arrangement comprises a filling valve 102. The filling valve 102 consists of a housing 104 defining a chamber 106 and a flexible diaphragm 108 mounted in the chamber. The housing 104 is a split housing and the lower portion (as viewed in Figure 3) is integral with the housing 43. The diaphragm 108 divides the chamber into two portions which have respective inlets 110, 112. The inlets 110, 112 are in flow communication with the passage 44 for supplying pressurised fluid to the chamber 106 to act on each of the opposed sides of the diaphragm 108.

The housing 104 defines an outlet port 114 and a valve seat 116. In a closed condition of the filling valve 102 the diaphragm 108 sealingly engages the valve seat 116. The housing also defines a spigot 118 having an exhaust port 120 extending therethrough. The spigot 118 communicates with the portion of the chamber 106 which receives pressurised fluid via the inlet 112 which is sized relative to the exhaust port 120 such that fluid can be exhausted from the chamber at a faster rate than it is input through the inlet 112.

An exhaust control valve is provided for the filling valve 102 in the form of a latching solenoid valve 124 which is housed in the control box 60. A flexible tube 126 extends from the spigot 118 to an insert 128 which projects from the control box 60. A valve member 130 of the solenoid valve 124 is sealingly engageable with the end 131 of the insert which is disposed in the control box for blocking the exhaust pathway from the filling valve 102. An exhaust port 132 is provided in the control box in flow communication with the solenoid valve 124. The solenoid valve is moveable between its open and closed positions in response to control signals provided by the control circuitry 76.

The solenoid valve 124 is actuated by the float 140. The float 140 has a centrally disposed through-bore and is arranged to be guided by the wall 58 which defines the exhaust passage 56.

A support arm 142 is fitted to the float 140 and carries a magnet 144 which forms one part of a reed switch, the other part of which is indicated at 146. When the plunger head 30 returns to the closed position shown in Figures 1 and 3 after the discharge of water from the cistern 12, the control circuitry 76 is aware that the valve means 14 has closed due to the polarity of the pulse used to close the solenoid valve 70. Since the water level 62 in the cistern is reduced by the discharge, the float 140 will have moved downwardly from the position shown in Figures 1 and 3 thereby moving the magnet 144 away from the control box 60 so that the reed switch is open. The open condition of the reed switch prompts the control circuitry to pulse the latching solenoid valve 124 causing the valve member 130 to be lifted away from the end 131 of the insert 128 thereby opening the exhaust pathway from the filling valve 102. The valve member 130 is magnetically latched in the lifted position.

With the exhaust pathway open, the pressurised water acting on the upper side of the diaphragm 108 is exhausted to the cistern 12 via the exhaust port 132. Since the rate of exhaust is greater than the rate at which fluid is supplied via the inlet 112 the pressure acting on the upper side of the diaphragm falls rapidly. This allows the diaphragm to be pushed away from the valve seat 116 by the pressurised fluid acting on the underside of the diaphragm so that the fluid can pass through the outlet port 114 to fill the cistern 12.

As the cistern fills, the float 140 rises towards the control box 60 until it reaches a position at which the magnet 144 closes the reed switch. This prompts the control circuitry 76 to provide a reverse polarity signal to the solenoid valve 124 releasing the valve member 130 which then seals against the end 131 of the insert 128 closing the exhaust pathway. With the exhaust pathway closed, the pressurised fluid passing through the inlet 112 gradually fills the upper portion of the chamber 106 until a pressure balance exists across the diaphragm 108. When the pressure balance is established the diaphragm rests against the valve seat 116 closing the filling valve 102.

It will be appreciated that by mounting the control box on the rigid wall defining the exhaust passage 56 installation of the apparatus is simplified since it can be fixed in position in the storage vessel simply by securing the outlet spigot in an opening provided therefor in the storage vessel. Of course stiffening members can be provided between the control box and housing 43 if required.

It will be appreciated that the length of the wall defining the exhaust passage can readily be adapted such that the control box will always be disposed above the intended maximum level of fluid to be stored in the vessel.

It will be understood that it is not essential that the body connected with the valve means forms a perfect seal with the chamber therefor. Some leakage past the body is permissible provided that when the exhaust means is open a pressure differential across the body sufficient to move the outlet valve means to an open position and maintain it there is obtained.

In tests it has been found that a current in the region of 12 amps is required to open the valve apparatus disclosed in WO-A-9402691 although a smaller current is used to hold the valve open. In tests on a valve apparatus 10 as disclosed herein, the valve means was opened and closed by a current pulse of 750 mA having a duration of 50 mS.

A second embodiment of a unitary valve apparatus for use in controlling the filling and the release of fluids from a fluids storage vessel and particularly (generally designated 200) suitable for use as a flushing valve in a water closet cistern will now be described with reference to Figures 5 to 9.

The valve apparatus 200 comprises an outlet valve means 212 and locating means for locating the outlet valve means relative to an opening in a water closet cistern 216. The locating means comprises a tubular member 218 which defines a discharge passage 220. An external surface of the tubular member 218 is provided with threading whereby the tubular member can be secured to the cistern by means of a nut (not shown).

The locating means further comprises a generally tubular body 222 which houses the outlet valve means 212. At one end thereof, the tubular body defines a fenestrated cup-like body 224. The cup-like body 224 has a flange 226 at the free end thereof. The flange 226 is configured to engage a mating flange 228 of the tubular member 218 to provide a twist-lock fitting whereby the tubular body 222 can be releasably fitted to the tubular member 218.

The outlet valve means 212 comprises sealing means in the form of a non-planar diaphragm 230. The tubular member 218 defines a valve seat 231 which is sealingly engaged by the diaphragm 230 when the outlet valve means 212 is in a flow preventing position.

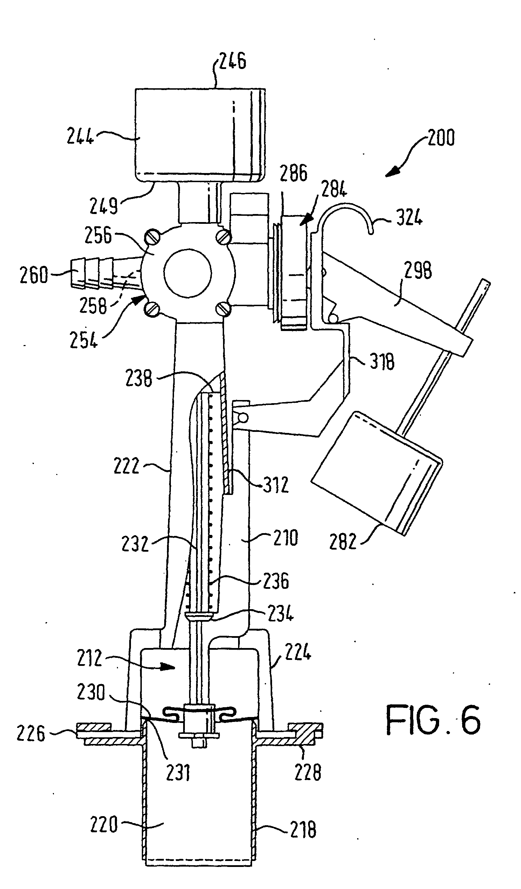

Referring to Figures 5 and 6 it will be seen that the diaphragm 230 is bellows-like in cross-section. This form permits overtravel of the outlet valve means when returning from a flow permitting position to a flow preventing position. The diaphragm 230 is fitted onto a plunger shaft 232 which extends upwardly in the tubular body 222.

A flange 234 is provided on the plunger shaft 232. A compression spring 236 extends about the plunger shaft and has one end seated on the flange 234. The other end of the compression spring is braced against a shoulder 238 defined by the tubular body 222. By means of this arrangement, the outlet valve means 212 is biassed to a flow preventing position as shown in Figure 6.

The outlet valve means 212 further comprises a piston 240 which is housed for relative sliding movement in a recess 242 defined by a housing 244. The housing 244 is open to atmosphere at its free end 246.

The underside 248 of the piston 240 (as viewed in the drawings) is secured to the plunger shaft 232 which penetrates the end of the piston housing 244 at its end 249 remote from the free end 246. The underside 248 of the piston is selectively exposable to pressurised water which generates a force acting on the piston by means of which the outlet valve means 212 is moveable from a flow preventing position to a flow permitting position.

The valve apparatus 200 further comprises a multi-port valve 254 associated with the outlet valve means 212. The multi-port valve 254 has three ports which are defined by a valve housing 256 which is formed integrally with the tubular body 222 and disposed intermediate the tubular body and the piston housing 244. The piston housing is releasably securable to the valve housing 256, preferably by a screw fitting arrangement.

The first port 258 of the three port valve 254 is an inlet port defined by a tubular projection 260 which extends outwardly of the valve housing 256 and is formed with barbs for retaining a flexible supply hose. Pressurised water from the water main or a header tank is supplied to the three port valve 254 by means of such a flexible hose fitted on the projection 260.

The three-port valve 254 has a respective member 262, 264 for blocking flow through its second port 266 and third port 268. The members 262, 264 are interconnected such that when one of the second and third ports is open, the other is blocked. The member 262 for blocking the second port 266 is a flexible diaphragm housed within a valve chamber 270.

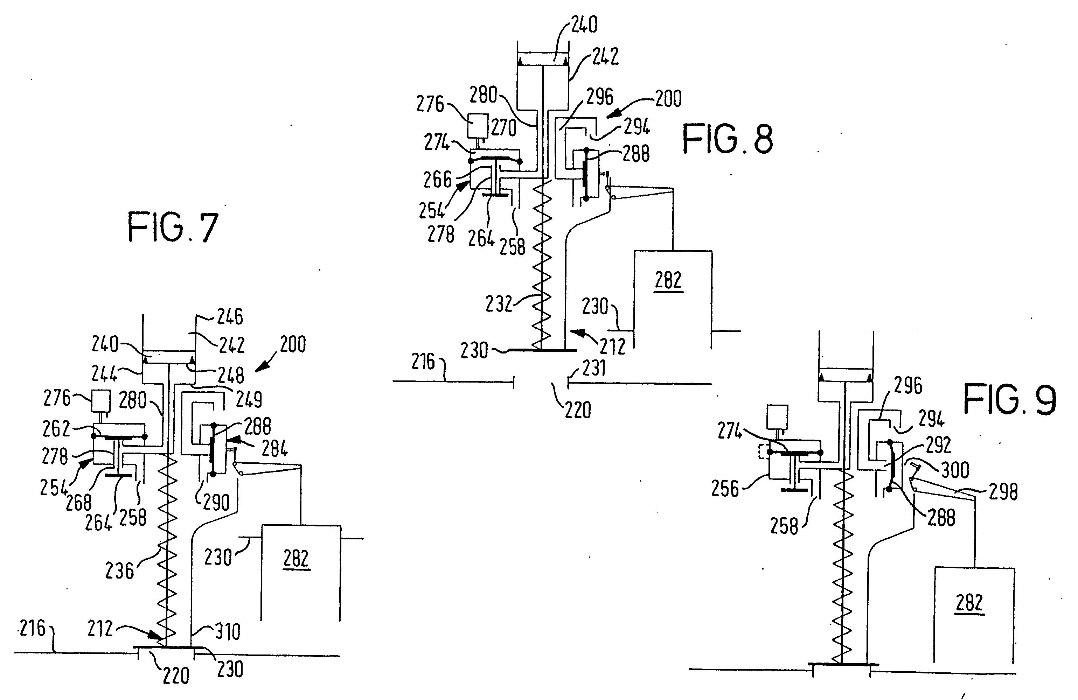

The opposed sides of the diaphragm 262 are each exposed to pressurised water received via the inlet port 258. Referring to Figure 9, pressurised water is supplied to the side 274 of the diaphragm disposed remote from the inlet port 258 (the upperside as viewed in the drawings) by means of one or more small apertures in the diaphragm or one or more passages defined by the valve housing 256 (one such passage is indicated by dashed lines in Figure 9). For the sake of convenience, in the description which follows, reference will be made to "the aperture" in the diaphragm; this should not be taken as limiting. A latching solenoid valve 276 is provided for selectively exhausting the pressurised water acting on the upperside 274 of the diaphragm 262. An infra red sensing device (not shown) can be used for actuating the solenoid valve 276 as explained in more detail below.

The second port 266 and third port 268 are defined by and communicate via a passage 278 defined within the valve housing 256. A branch passage 280 extends from the passage 278 to the piston chamber 242 such that pressurised water can be supplied to and exhausted from the piston chamber 242 via the second and third ports 266, 268 respectively.

The valve apparatus 200 further comprises a float 282 for detecting the level of the water stored in the cistern 216 and a multi-port filling valve 284 operable by the float.

The filling valve 284 comprises a valve housing 286 and a valve member in the form of a flexible diaphragm 288 which is disposed in the valve housing 286. The filling valve housing 286 defines an inlet port 290 for receiving pressurised water to be stored in the cistern 216 and an exit port 292 which is indicated in Figure 9. In the schematic representations in Figures 7 to 9, the inlet port 290 is shown as being separate to the inlet port 258 of the multi-port valve 254. However, it will be appreciated that in practice the inlet port 290 can be fed with water from the inlet port 258 via suitable passages provided within the apparatus. The exit port 292 is connected to an outlet 294 of the valve apparatus 200 by a passage 296 which extends therebetween. The outlet 294 is arranged such that, in use, it will usually be disposed above the level of the water stored in the cistern to prevent back-syphoning of the stored water into the water main or header tank.

The opposed sides of the filling valve diaphragm 288 are exposed, in use, to the pressurised water received via the inlet port 290. The float 282 is pivotally mounted to the filling valve housing 286 by means of a lever arm 298. The lever arm 298 carries a seal (not shown) which blocks an exhaust aperture 300 in the filling valve housing 286 when the float is in the raised position as shown in Figures 5, 7 and 8. When the float is not held in such a raised position, the lever arm seal no longer blocks the exhaust aperture 300 thereby allowing water acting on the side of the diaphragm disposed remote from the exit port 292 to exhaust from the filling valve housing into the cistern 216. As with the diaphragm 262 of the three-port valve 254, water is supplied to the side of the diaphragm remote from the supply side of the valve either by means of one or more apertures in the diaphragm or one or more suitably arranged passages (not shown) defined by the filling valve housing. Again, for the sake of convenience, in the description which follows, reference will be made to "the aperture" in the diaphragm; this should not be taken as limiting.

The valve apparatus 200 further comprises means for preventing the float from moving from the raised position shown in Figure 5 whilst the outlet valve means 212 is in a flow permitting position, even though the water level in the cistern may have fallen such that the float is no longer supported by the stored water.

The movement preventing means comprises an arm 310 formed integrally with the plunger shaft 232. The arm 310 extends through an elongate slot 312 which is provided in the tubular body 222 and extends in the lengthwise direction thereof. A lever element 314 is fixed to the arm 310 at the free end thereof. The lever element 314 has a link portion 316 which is linked to and extends transversely of the arm 310. The lever element 314 defines a stop surface 313 and a support surface 320. The stop surface 318 extends from the end of the link portion 316 disposed remote from the arm 310 in a direction generally parallel to the axis of the plunger shaft 232 whilst the support surface 320 is contiguous with and extends generally perpendicular to the stop surface. The lever element 314 is supported by the arm 310 and means (not shown) are provided on the filling valve housing 286 to constrain the lever element 314 to move only in directions generally parallel to the axis of the plunger shaft 232. A rod like projection, or stop, 222 is carried on the float lever arm 298 for engaging the stop surface 318 and support surface 320.

The lever element 314 defines a hook 324 at its free end. The hook 324 allows the valve apparatus 200 to be manually operated whenever this proves desirable.

Use of the valve apparatus 200 will now be described with reference to Figures 7 to 9.

Figure 7 shows the valve apparatus 200 in an initial condition with the outlet valve means 212 in a flow preventing position and the float 282 held in a raised condition by the level of water 230 stored in the cistern 216. Pressurised water is supplied to the multi-port valve 254 and the filling valve 284 via flexible pipes (not shown) which feed their respective inlet ports 258, 290. In this condition, each side of the diaphragms 262, 288 is exposed to the pressurised water and is therefore in an equilibrium state maintaining the valves 254 and 284 in a closed condition. In this condition, the multi-port valve 254 prevents the supply of pressurised water to the underside 248 of the piston 240 and exposes that side of the piston to atmospheric pressure via the passages 278, 280 extending between the piston chamber 242 and the third port 268 of the valve. Since both sides of the piston 240 are exposed to atmospheric pressure there is no net force acting across the piston and the outlet valve means is biassed to and held in a flow preventing position by means of the compression spring 236.

In order to open the valve apparatus 200 to flush a lavatory a trigger signal is required. This can be provided manually by means of a switch or by means of a sensing device. In a preferred arrangement an infrared sensing device is used. The infrared sensing device can be mounted in the cistern or elsewhere adjacent the lavatory such that it can be operated by a user passing his/her hand in front of it. Alternatively, the sensing device can be arranged to be operated by a user simply approaching the lavatory. In either case, the trigger signal is passed to the latching solenoid 276 in the form of an electrical pulse by means of a suitable control circuit.

When the latching solenoid 276 is pulsed, a plunger thereof is raised to a flow permitting position and held there by magnetic attraction. The pressurised water acting on the side 274 of the diaphragm adjacent the solenoid valve is exhausted into the cistern 216 causing the diaphragm to be lifted away from the second port 266 to the position shown in Figure 8 by the pressurised water acting on its side opposite to the side 274. It will be appreciated that in order for this to occur, the aperture in the diaphragm is sized such that water passes therethrough at a much slower rate than it is exhausted via the solenoid valve 276. As the second port 266 of the multi-port valve 254 is opened by the movement of the diaphragm 262, the third port 268 is closed by the member 264. Accordingly, the piston chamber 242 is fed with pressurised water via the second port 266 and passages 278, 280 thereby exposing the underside 248 of the piston to the pressure of the water which generates a lifting force which causes the outlet valve means 212 to rise. In particular, the piston 240 rises in the chamber 242 and lifts the diaphragm 230 away from the valve seat 231. With the valve apparatus 200 now in a flow permitting condition, the water in the cistern 216 is able to pass through the apertures in the fenestrated cup-like body 224 and exit the cistern via the discharge passage 220.

Referring to Figures 5 and 8 which show the same condition of the valve apparatus, it is to be noted that whilst the outlet valve means 212 is in a flow permitting position and the water level 230 falls, the float 282 is prevented from moving with the water level and therefore the filling valve 284 remains closed. This is because when the plunger shaft 232 rises with the piston 240 to open the valve apparatus 200, the stop surface 318 is brought into engagement with the stop 222 carried by the float lever arm 298. It will be apparent from Figure 5 that the arrangement is such that whilst the stop 222 engages the stop surface 318, the float 282 cannot pivot downwardly as the water level drops but is instead held in position so that the exhaust aperture 300 remains closed.

When the flushing cycle is complete, the control circuitry provides an electrical pulse to the solenoid valve 276 causing it to close. Pressurised water fed into the multi-port valve 254 via its inlet port 258 slowly makes its way past the diaphragm 262 via the aperture therein and gradually restores the pressure balance across the diaphragm causing it to close the second port 266; this is the position shown in Figure 9. As the second port is closed, the third port 268 is opened allowing the pressurised water acting on the underside 248 of the piston 240 to exhaust to the cistern 216. Each side of the piston is thus subject to atmospheric pressure allowing the biassing force of the spring 236 to return the outlet valve means 212 to a flow preventing position in which the diaphragm 230 sealingly engages the valve seat 231 preventing further discharge of water from the cistern 216.

Referring to Figures 6 and 9 which show the same condition of the valve apparatus 200, it will be appreciated that as the outlet valve means 212 descends, the stop surface 318 is moved downwardly relative to the stop 222 until it no longer engages the stop. The float is then unsupported and falls opening the exhaust aperture 300 so that the pressurised water acting on the side of the filling valve diaphragm 288 adjacent the exhaust aperture 300 is exhausted into the cistern 216. The aperture in the diaphragm 288 is sized such that water is exhausted via the aperture 300 at a faster rate than it can pass across the diaphragm. The thus generated reduction in the pressure acting on the side of the diaphragm adjacent the exhaust aperture 300 causes the diaphragm to move away from the exit port 292 under the influence of the pressurised water supplied to the filling valve 284 via its inlet port 290. Pressurised water is thus able to pass through the inlet port 290 into the passage 296 and is discharged into the cistern via the outlet 294. As the cistern is filled with water discharged from the outlet 294, the float 282 gradually rises from the position shown in Figures 6 and 9 supported by the water until the float assumes the position shown in Figure 7 and the exhaust aperture 300 is closed.

With the exhaust aperture 300 closed, pressurised water passing through the aperture in the diaphragm 288 gradually raises the pressure acting on the side of the diaphragm disposed remote from the inlet port 290 causing the diaphragm to move to the position shown in Figure 7 in which the exit port 292 is again blocked and the supply of water from the inlet port 290 to the outlet 294 is interrupted. A flushing cycle is thereby completed and the valve apparatus 200 is restored to an equilibrium state ready to commence a new flushing cycle when required.

It will be appreciated that in the valve apparatus 200 an interlock is provided between the outlet valve means 212 and the filling valve 284 so that pressurised water cannot pass from the inlet port 290 to the valve apparatus outlet 294 to refill the cistern 216 during a flushing cycle until the outlet valve means 212 returns to a flow preventing position. This is because whenever the outlet valve means 212 is moved away from the flow preventing condition the stop surface 318 is simultaneously moved into engagement with the stop 222 on the float lever arm 298 thereby preventing the filling valve 284 from opening to permit the discharge of water from the outlet 294. The interlock is such that the filling valve 284 is opened only when the outlet valve means 212 is in a closed, or at least substantially closed, position. Accordingly, if the outlet valve means 212 fails and sticks in a flow permitting condition, water is not wasted.

Referring to Figure 6, it will be noted that when the outlet valve means 212 is initially returned to the flow preventing position and there is insufficient water in the cistern to support the float 282, the float is supported by the support surface 320 which is engaged by the stop 222. If the outlet valve means 212 is then moved from the flow preventing position, the float is lifted by the upwardly moving support surface 320 to a position in which the exhaust aperture 300 is blocked; in this position the stop 222 is engaged by the stop surface 318. Thus, if the outlet valve means 212 is moved from the flow preventing position whilst the cistern is in the process of being filled, the filling valve 284 will be closed preventing the discharge of water from the valve apparatus outlet 294. As indicated above, the construction of the diaphragm 230 is such as to permit overtravel of the outlet valve means 212 when it returns from a flow permitting position to the flow preventing position. It will be appreciated that this overtravel is necessary to completely disengage the stop surface 318 and the stop 222. If no overtravel is provided, the interlock mechanism has to be configured such that the filling valve 284 opens fractionally before the outlet valve means is fully closed. It will also be appreciated that overtravel can be provided otherwise than by means of a non-planar diaphragm. For example, overtravel can be obtained by having the sealing means non-rigidly attached to the plunger shaft and providing a restoring spring to act in the direction opposite to the biassing spring 236.

It will be understood that in the valve apparatus 200 in place of a solenoid valve actuable to cause the outlet valve means to move from the flow preventing position, a push button valve operable by a user could be provided for bleeding water pressure from the valve apparatus via a flexible tube. Alternatively, the outlet valve means may be manually raised from the flow preventing position without the aid of magnetic forces or water pressure.

As a further measure to increase the security of the valve apparatus 200 it is envisaged that the apertures of the fenestrated cup may be covered by a mesh in order to avoid the possibility of particles becoming trapped between the sealing diaphragm 230 and the valve seat 231. In the case where the cup-like body 224 and tubular body 222 is formed as a plastics moulding, it is envisaged that the mesh may be moulded integrally therewith.

It will be understood that the valve apparatus 10 and 200 are particularly suitable for use with a battery power supply since electrical energy is only required in the form or pulses for opening and closing the solenoid valves 70, 124 or 276. The valve members of the apparatus 10 and 200 are moved to their open positions by means or the pressurised fluid fed to the cistern 12, 216 and thus the power source for the outlet valve means can be the fluid which is to be stored in the vessel. In the preferred use of these valve apparatus as a flushing valve in a water closet cistern the power source moving the valve means is the water supply to the cistern.

It will also be appreciated that in the embodiments the valve apparatus may be triggered by means other than an infra red sensor device. For example, a switch operable by a user can be employed.

It will be appreciated that these valve apparatus are suitable for use in fluids storage vessels other than water closet cisterns and that a main water supply or a supply of pressurised water from a header tank could be used to control the valve apparatus for dispensing liquids other than water from the storage vessel.

It will be understood that the configuration of the valve apparatus 10 and 200 provides the advantage that it is not necessary to install an additional valving device for controlling filling of the storage vessel.

It will be appreciated that the valve apparatus of the embodiments can readily be retrofitted to existing fluids storage vessels.

In the case of a water closet cistern for a lavatory, the outlet spigot can readily be fitted in place of the outlet spigot of a conventional syphon valve and an infra red sensor can be fitted in place of the conventional flush handle.

## Claims

1. A valve apparatus for use in controlling the filling and the release of fluids from a fluids storage vessel (12, 216), said valve apparatus comprising an outlet valve means (14, 212) for controlling release of fluid from said vessel, a filling valve means (102, 284) for controlling filling of said vessel and float means (140, 282) carried by or on one of said outlet valve means or said filling valve means for detecting the level of fluid in said vessel, said outlet valve means having or being associated with a chamber (43, 270) containing a member (40, 262) having a first side and a second side, said second side being exposed, in use, to a pressurised fluid and said member being moveable to open said outlet valve means by the said pressurised fluid acting on the second said side thereof, **characterised in that** said valve apparatus is of unitary form, with the filling valve means (102, 284) being carried by or on the outlet valve means (14, 212), **in that** the filling valve means has or is associated with a chamber (104, 286) containing a member (108, 288) having a first side and a second side, each of which sides is exposed in use to a pressurised fluid, **in that** said first side of the chamber (43, 270) associated with the outlet valve means (14, 212) is also exposed, in use, to a pressurised fluid, and **in that** each respective said member of the outlet valve means and filling valve means is independently moveable to open its associated valve means by the said pressurised fluid acting on the second side thereof when the pressurised fluid acting on the first side thereof is released.

2. Apparatus as claimed in claim 1, comprising locating means (16, 218) for locating said apparatus relative to an opening (18) in said vessel (12, 216).

3. Apparatus as claimed in claim 2, wherein said locating means defines an outlet passage (26, 220) adapted to extend through said opening.

4. Apparatus as claimed in claim 2 or 3, wherein said outlet valve means is releasably securable to said locating means.

5. Apparatus as claimed in any one of claims 1 to 4, wherein, in use, movement of said float means in response to a decreased level of fluid in said vessel causes opening of an exhaust (300) of said filling valve means for releasing the said pressurised fluid acting on said first side of said respective member, whereby said filling valve means is opened to permit filling of said vessel.

6. Apparatus as claimed in claim 5, wherein said float means is arranged for pivotal movement.

7. Apparatus as claimed in claim 5 or 6, comprising means (298) for blocking said exhaust, said blocking means being moveable with said float means for opening and closing said exhaust.

8. Apparatus as claimed in any one of the preceding claims, wherein said outlet valve means comprises a housing (244) which houses a body (240) having a first side exposed to atmospheric pressure and a second side which is selectively exposable to said pressurised fluid by movement of said respective member (262) of said chamber (270) associated with said outlet valve means such that, in use, movement of said respective member caused by said release of the said pressurised fluid acting on said first side thereof exposes said second side of said body to said pressurised fluid whereby by means of a force generated by said pressurised fluid acting on said second side of said body said outlet valve means is opened to permit said release of fluid from said vessel.

9. Apparatus as claimed in claim 8, wherein said chamber (270) associated with said outlet valve means communicates or is communicable with three ports, a first said port (258) being selectively blocked by the said respective member contained in said chamber and a second (266) of said ports being selectively blocked by a blocking member connected to said respective member contained in said chamber, the arrangement being such that when one of said first and second ports is open the other said port is blocked and wherein when said first port is open said second side of said body is exposed to said pressurised fluid to open said outlet valve means and when said second port is open said pressurised fluid acting on said second side of said body is released to permit said outlet valve means to close.

10. Apparatus as claimed in any one of claims 1 to 5, comprising an exhaust conduit (58) extending from said outlet valve means (14) for releasing the said pressurised fluid acting on said first side of said member (40) contained within said chamber (43) associated with said outlet valve means, said float means (140) being arranged to be guided by said exhaust conduit.

11. Apparatus as claimed in claim 10, comprising operating means for operating said outlet valve means and filling valve means and a housing (60) for said operating means, said housing being mounted on a distal end of said exhaust conduit and said float means being arranged such that, in use, said housing is disposed above the level of the fluid stored in said vessel.

12. Apparatus as claimed in any one of the preceding claims, comprising an inlet (80, 260) for receiving said pressurised fluid and passage means for conducting said pressurised fluid from said inlet to said respective chambers.

13. A flushing system for a lavatory or urinal comprising a cistern, a valve apparatus as claimed in any one of the preceding claims and a pressurised water supply in flow communication with said valve apparatus.

## Patentansprüche

1. Ventilgerät zum Steuern des Einfüllens und des Entlassens eines Fluids aus einem Fluidaufbewahrungsbehältnis (12, 216) mit:
einer Auslassventilvorrichtung (14, 212) zum Steuern des Auslassens eines Fluids aus dem Behältnis,
einer Füllventilvorrichtung (102, 284) zum Steuern des Befüllens des Behältnis, und
einer Schwimmervorrichtung (140, 282) zum Feststellen des Fluidpegels in dem Behältnis die von oder auf entweder der Auslassventilvorrichtung oder der Füllventilvorrichtung getragen ist,
wobei die Auslassventilvorrichtung eine Kammer (43, 270) aufweist oder einer Kammer zugeordnet ist, die ein Element (40, 262) mit einer ersten und einer zweiten Seite umfasst,
wobei die zweite Seite in Gebrauch einem Druckfluid ausgesetzt ist, und wobei das Element beweglich ist, um die Auslassventilvorrichtung dadurch zu öffnen, dass das Druckfluid auf die zweite Seite des Elements wirkt,
**dadurch gekennzeichnet, dass**
das Ventilgerät eine einheitliche Form aufweist, wobei die Füllventilvorrichtung (102, 284) von oder auf der Auslassventilvorrichtung (14, 212) getragen ist,
die Füllventilvorrichtung eine Kammer (104, 286) aufweist oder einer Kammer zugeordnet ist, die ein Element (108, 228) mit einer ersten und einer zweiten Seite umfasst, wobei jede dieser Seiten in Gebrauch einem Druckfluid ausgesetzt ist,
die erste Seite der Kammer (43, 270), die der Auslassventilvorrichtung (14, 212) zugeordnet ist, in Gebrauch ebenfalls einem Druckfluid ausgesetzt ist, und
die entsprechenden jeweiligen Elemente der Auslassventilvorrichtung bzw. der Füllventilvorrichtung unabhängig voneinander bewegbar sind, um die jeweils mit ihnen verbundene Ventilvorrichtung dadurch zu öffnen, dass das Druckfluid auf die zweite Seite des Elements wirkt, wenn das komprimierte Fluid, das auf die erste Seite des Elements wirkt, ausgelassen wird.

2. Gerät nach Anspruch 1, mit einer Positioniervorrichtung (16, 218), die das Gerät relativ zu einer Öffnung (18) in dem Behältnis (12, 216) positioniert.

3. Gerät nach Anspruch 2, wobei die Positioniervorrichtung einen Auslassdurchgang (26, 220) definiert, der so ausgelegt ist, dass er durch die Öffnung verläuft.

4. Gerät nach Anspruch 2 oder 3, wobei die Auslassventilvorrichtung lösbar an der Positioniervorrichtung anbringbar ist.

5. Gerät nach einem der Ansprüche 1 bis 4, wobei eine Bewegung der Schwimmervorrichtung als Reaktion auf einen sinkenden Pegel des Fluids in dem Behältnis zu einem Öffnen eines Auslasses (300) der Füllventilvorrichtung führt, um das komprimierte Fluid, das auf der ersten Seite des entsprechenden Elements wirkt, auszulassen, wodurch die Füllvorrichtung geöffnet wird, um ein Füllen des Behältnisses zu erlauben.

6. Gerät nach Anspruch 5, wobei die Schwimmervorrichtung für eine Schwenkbewegung ausgebildet ist.

7. Gerät nach Anspruch 5 oder 6 mit Vorrichtungen (298) zum Blockieren des Auslasses, wobei die Blockiervorrichtung zusammen mit der Schwimmervorrichtung bewegbar ist, um den Auslass zu öffnen und zu schießen.

8. Gerät nach einem der vorhergehenden Ansprüche, wobei die Auslassventilvorrichtung ein Gehäuse (244) umfasst, welches einen Körper (240) mit einer ersten Seite, die dem Atmosphärendruck ausgesetzt ist, und einer zweiten Seite, die durch Bewegung des entsprechenden Elements (262) der der Auslassventilvorrichtung zugeordneten Kammer (270) selektiv dem Druckfluid ausgesetzt ist, umfasst, so dass die durch den Auslass des auf die erste Seite des Elements wirkenden komprimierten Fluids verursachte Bewegung des entsprechenden Elements die zweite Seite des Körpers dem Druckfluid aussetzt, wobei mittels einer Kraft, erzeugt durch das auf die zweite Seite des Körpers wirkende komprimierte Fluid, die Auslassventilvorrichtung geöffnet wird, um zuzulassen, dass das Fluid aus dem Behältnis ausgelassen wird.

9. Gerät nach Anspruch 8, wobei die der Auslassventilvorrichtung zugeordnete Kammer (270) mit drei Anschlüssen verbunden ist oder verbindbar ist, wobei der erste Anschluss (258) selektiv durch das in der Kammer vorhandene entsprechende Element blockiert ist, und der zweite Anschluss (266) selektiv durch ein Blockierelement blockiert ist, das mit dem entsprechenden in der Kammer vorhandenen Element verbunden ist, die so angeordnet sind, dass, wenn entweder der erste oder der zweite Anschluss geöffnet ist, jeweils der andere Anschluss blockiert ist und wobei, wenn der erste Anschluss offen ist, die zweite Seite des Körpers dem Druckfluid ausgesetzt ist, um die Auslassventilvorrichtung zu öffnen, und, wenn der zweite Anschluss offen ist, das Druckfluid, das auf die zweite Seite des Körpers wirkt, ausgelassen wird, um ein Schließen der Auslassventilvorrichtung zuzulassen.

10. Gerät nach einem der Ansprüche 1 bis 5 mit einer Auslassführung (58), die von der Auslassventilvorrichtung (14) verläuft, zum Auslassen des Druckflüids, das auf die erste Seite des in der der Auslassventilvorrichtung zugeordneten Kammer (43) vorhandenen Elements (40) wirkt, wobei die Schwimmervorrichtung (140) so angeordnet ist, dass sie durch die Auslassführung geführt ist.

11. Gerät nach Anspruch 10 mit einer Bedienvorrichtung zum Bedienen der Auslassventilvorrichtung und der Füllventilvorrichtung und einem Gehäuse (60) für die Bedienvorrichtung, wobei das Gehäuse an einem distalen Ende der Auslassführung angebracht ist und die Schwimmervorrichtung so angeordnet ist, dass sich das Gehäuse oberhalb des Pegels des in dem Behältnis gespeicherten Fluids befindet.

12. Gerät nach einem der vorhergehenden Ansprüche, mit einem Einlass (80, 260) zum Empfangen eines Druckfluids und einer Durchführvorrichtung zum Führen des Druckfluids von dem Einlass zu den entsprechenden Kammern.

13. Spülsystem für eine Toilette oder ein Urinal mit einer Zisterne, einem Ventilgerät nach einem der vorhergehenden Ansprüche und einer Druckwasserbereitstellung in Fließverbindung mit dem Ventilgerät.

## Revendications

1. Dispositif formant soupape destiné à être utilisé dans la commande du remplissage d'un récipient de stockage (12, 216) de fluides et de l'évacuation de ces fluides dudit récipient, ledit dispositif comprenant un moyen formant soupape de sortie (14, 212) pour commander l'évacuation de fluide dudit récipient, un moyen formant soupape de remplissage (102, 284) pour commander le remplissage dudit récipient et un moyen formant flotteur (140, 282) porté par ou sur l'un desdits moyen formant soupape de sortie et moyen formant soupape de remplissage pour détecter le niveau de fluide dans ledit récipient, ledit moyen formant soupape de sortie comportant ou étant associé à une chambre (43, 270) contenant un élément (40, 262) ayant un premier côté et un deuxième côté, ledit deuxième côté étant exposé, en utilisation, à un fluide sous pression et ledit élément étant mobile pour ouvrir ledit moyen formant soupape de sortie grâce audit fluide sous pression agissant sur ledit deuxième côté de celui-ci, **caractérisé en ce que** ledit dispositif formant soupape est de forme unitaire, le moyen formant soupape de remplissage (102, 284) étant porté par ou sur le moyen formant soupape de sortie (14, 212), **en ce que** le moyen formant soupape de remplissage comporte ou est associé à une chambre (104, 286) contenant un élément (108, 288) ayant un premier côté et un deuxième côté, chacun desdits côtés étant exposé en utilisation à un fluide sous pression, **en ce que** ledit premier côté de la chambre (43, 270) associée au moyen formant soupape de sortie (14, 212) est également exposé, en utilisation, à un fluide sous pression, et **en ce que** chaque élément respectif du moyen formant soupape de sortie et du moyen formant soupape de remplissage est mobile de façon indépendante pour ouvrir son moyen formant soupape associé grâce audit fluide sous pression agissant sur le deuxième côté de celui-ci quand le fluide sous pression agissant sur le premier côté de celui-ci est libéré.

2. Dispositif selon la revendication 1, comprenant un moyen de positionnement (16, 218) pour positionner ledit dispositif par rapport à une ouverture (18) prévue dans ledit récipient (12, 216).

3. Dispositif selon la revendication 2, dans lequel ledit moyen de positionnement définit un passage de sortie (26, 220) adapté pour s'étendre à travers ladite ouverture.

4. Dispositif selon la revendication 2 ou 3, dans lequel ledit moyen formant soupape de sortie peut être fixé de manière détachable audit moyen de positionnement.

5. Dispositif selon l'une quelconque des revendications 1 à 4, dans lequel, en utilisation, le mouvement dudit moyen formant flotteur en réponse à un niveau diminué de fluide dans ledit récipient provoque l'ouverture d'un échappement (300) dudit moyen formant soupape de remplissage pour évacuer ledit fluide sous pression agissant sur ledit premier côté dudit élément respectif, grâce à quoi ledit moyen formant soupape de remplissage est ouvert pour permettre le remplissage dudit récipient.

6. Dispositif selon la revendication 5, dans lequel ledit moyen formant flotteur est agencé en vue d'un mouvement pivotant.

7. Dispositif selon la revendication 5 ou 6, comprenant un moyen (298) servant à bloquer ledit échappement, ledit moyen de blocage étant mobile avec ledit moyen formant flotteur pour ouvrir et fermer ledit échappement.

8. Dispositif selon l'une quelconque des revendications précédentes, dans lequel ledit moyen formant soupape de sortie comprend un boîtier (244) qui abrite un corps (240) ayant un premier côté exposé à la pression atmosphérique et un deuxième côté qui peut être exposé sélectivement audit fluide sous pression par le mouvement dudit élément respectif (262) de ladite chambre (270) associée audit moyen formant soupape de sortie de telle manière que, en utilisation, le mouvement dudit élément respectif provoqué par ladite évacuation dudit fluide sous pression agissant sur ledit premier côté de celui-ci expose ledit deuxième côté dudit corps audit fluide sous pression grâce à quoi, au moyen d'un force produite par ledit fluide sous pression agissant sur ledit deuxième côté dudit corps, ledit moyen formant soupape de sortie est ouvert pour permettre ladite évacuation de fluide dudit récipient.

9. Dispositif selon la revendication 8, dans lequel ladite chambre (270) associée audit moyen formant soupape de sortie communique, ou peut être mise en communication, avec trois orifices, un premier (258) desdits orifices étant sélectivement bloqué par ledit élément respectif contenu dans ladite chambre et un deuxième (266) desdits orifices étant sélectivement bloqué par un élément de blocage connecté audit élément respectif contenu dans ladite chambre, l'agencement étant tel que lorsque l'un desdits premier et deuxième orifices est ouvert l'autre desdits orifices est bloqué et où quand ledit premier orifice est ouvert ledit deuxième côté dudit corps est exposé audit fluide sous pression pour ouvrir ledit moyen formant soupape de sortie et quand ledit deuxième orifice est ouvert ledit fluide sous pression agissant sur ledit deuxième côté dudit corps est libéré pour permettre audit moyen formant soupape de sortie de se fermer.

10. Dispositif selon l'une quelconque des revendications 1 à 5, comprenant un conduit d'échappement (58) s'étendant depuis ledit moyen formant soupape de sortie (14) pour libérer ledit fluide sous pression agissant sur ledit premier côté dudit élément (40) contenu dans ladite chambre (43) associée audit moyen formant soupape de sortie, ledit moyen formant flotteur (140) étant agencé de façon à être guidé par ledit conduit d'échappement.

11. Dispositif selon la revendication 10, comprenant un moyen d'actionnement pour actionner ledit moyen formant soupape de sortie et ledit moyen formant soupape de remplissage et un boîtier (60) pour ledit moyen d'actionnement, ledit boîtier étant monté sur une extrémité distale dudit conduit d'échappement et ledit moyen formant flotteur étant agencé de telle manière que, en utilisation, ledit boîtier est disposé au-dessus du niveau du fluide stocké dans ledit récipient.

12. Dispositif selon l'une quelconque des revendications précédentes, comprenant un orifice d'entée (80, 260) pour recevoir ledit fluide sous pression et un moyen de passage pour conduire ledit fluide sous pression dudit orifice d'entrée auxdites chambres respectives.

13. Système de chasse d'eau pour toilettes ou pour urinoir comprenant un réservoir, un dispositif formant soupape conforme à l'une quelconque des revendications précédentes et une alimentation en eau sous pression en communication d'écoulement avec ledit dispositif formant soupape.
